# EUROPÄISCHE PATENTANMELDUNG

(11) **EP 1 137 149 A2**
(43) Veröffentlichungstag der Anmeldung: **26.09.2001**
(21) Anmeldenummer: 01106042.3
(22) Anmeldetag: 12.03.2001
(51) Int. Cl.: H02J 3/38

(54) **Vorrichtung und Verfahren zur Energieversorgung eines autonomen Netzes**

(30) Priorität: 24.03.2000 DE 10014642
(71) Anmelder: SIEMENS AKTIENGESELLSCHAFT, 80333 München (DE)
(72) Erfinder: Garbrecht, Dietmar, 91052 Erlangen (DE)

(57) **Zusammenfassung**

Zur unterbrechungsfreien Energieversorgung eines Inselnetzes (53) wird die Energie eines ersten Energieerzeugers (2) in Form vorzugsweise eines Windgenerators und eines zweiten Energieerzeugers in Form vorzugsweise eines Dieselgenerators (4) in einen gemeinsamen kapazitiven Zwischenkreis (26) eingespeist, aus dem wiederum die Energie in das Netz (53) eingespeist wird. Der kapazitive Zwischenkreis (26) ist zweckmäßigerweise durch einen Umrichter (6) mit einem wechselstromseitig an den Windgenerator (2) angeschlossenen Wechselrichter (20) und einen wechselstromseitig an den Dieselgenerator (4) angeschlossenen Gleichrichter (24) realisiert.

## Beschreibung

Die Erfindung bezieht sich auf eine Vorrichtung zur Energieversorgung eines autonomen Netzes, mit einem Windgenerator und mit einem Dieselgenerator. Sie bezieht sich weiter auf ein Verfahren zur unterbrechungsfreien Energieversorgung eines derartigen Netzes. Unter autonomes Netz wird hierbei insbesondere ein Inselnetz verstanden.

Aus der EP 0 046 530 A1 ist ein sogenanntes Wind-Diesel-System bekannt, bei dem ein Windgenerator und ein Dieselgenerator ein autonomes Wechselstromnetz speisen. Während der Dieselgenerator von einer Dieselmaschine angetrieben wird, wandelt der eine Windturbine und ein Getriebe sowie einen Generator umfassende Windgenerator die im Wind enthaltene Primärenergie in elektrische Energie um. Der Windgenerator ist mittels eines einen Gleichrichter und eine Zwischenkreis-Drossel sowie einen Wechselrichter aufweisenden Umsetzers mit dem autonomen Netz verknüpft. Der Gleichrichter ist wechselspannungsseitig mit den Ausgängen des elektrischen Generators verbunden, wogegen der Wechselrichter wechselspannungsseitig mit den Leitungen des autonomen Netzes verknüpft ist. Die Zwischenkreis-Drossel verbindet den Gleichrichter und den Wechselrichter des Umsetzers gleichspannungsseitig miteinander.

Durch die Verwendung eines derartigen netzkommutierten Umsetzers wird dieses sogenannte Wind-Diesel-System zwar flexibel. Jedoch wirkt sich bei diesem System nachteilig aus, dass der Dieselgenerator und der Windgenerator parallel in das autonome Netz einspeisen. Dadurch kann es vorkommen, dass bei einem Windeinbruch, d.h. bei einer infolge des stochastischen Windverhaltens geringen Windenergie und einem hohen Leistungsverbrauch im autonomen Netz aufgrund der Reaktionszeit des Dieselgenerators zu viel Zeit vergeht, bis dieser gestartet und hochgelaufen ist. Dies ist der Grund dafür, dass die beiden Generatoren für eine vorbestimmte Zeit parallel betrieben werden. Um dauerhaft eine gewünschte unterbrechungsfreie Energieversorgung des autonomen Netzes zu gewährleisten, müsste der Parallelbetrieb der beiden Generatoren für eine Vielzahl möglicher Fälle ausgelegt werden, was jedoch eine unerwünscht aufwendige Steuerung erfordert.

Der Erfindung liegt daher die Aufgabe zugrunde, eine Vorrichtung und ein Verfahren zur unterbrechungsfreien Energieversorgung eines autonomen Netzes, insbesondere eines Inselnetzes anzugeben.

Bezüglich der Vorrichtung wird diese Aufgabe erfindungsgemäß gelöst durch die Merkmale des Anspruchs 1. Dazu ist eine Stromrichterschaltung mit vorzugsweise drei gleichspannungsseitig parallel geschalteten Stromrichtern vorgesehen, wobei ein Windgenerator und ein Dieselgenerator ausgangsseitig mit wechselspannungsseitigen Eingängen eines ersten bzw. eines zweiten Stromrichters und das autonome Netz eingangsseitig mit wechselspannungsseitigen Ausgängen eines dritten Stromrichters dieser Stromrichterschaltung verknüpft sind.

Der wechselspannungsseitig an den ersten Stromrichter geführte Windgenerator und der wechselspannungsseitig an den zweiten Stromrichter geführte Dieselgenerator speisen somit deren Energie oder Leistung in einen Gleichspannungs-Zwischenkreis der Stromrichterschaltung ein, während die Energie- bzw. Leistungsentnahme des autonomen Netzes über den dritten Stromrichter der Stromrichterschaltung aus deren zweckmäßigerweise eine Kondensatorbatterie aufweisenden Zwischenkreis erfolgt. Die Kondensatorbatterie - und somit der Zwischenkreis - wirkt daher als kapazitiver Speicher oder Puffer.

Die Erfindung geht dabei von der Überlegung aus, dass eine unterbrechungsfreie Energieversorgung eines autonomen Netzes möglich ist, wenn das erkanntermaßen hohe Speichervermögen eines als kapazitiver Speicher wirksamen Gleichspannungs-Zwischenkreises als Puffer zum Ausgleich von Leistungsschwankungen genutzt wird. Eine derartige Nutzung wiederum ist dadurch möglich, dass einerseits nicht nur der Windgenerator, sondern auch der Dieselgenerator dessen Leistung in den Zwischenkreis einer aus vorzugsweise drei Stromrichtern aufgebauten Stromrichteranordnung einspeist, und dass andererseits die dem Netz zuzuführende Leistung oder Energie direkt aus dem Zwischenkreis entnommen wird. Die Ankopplung des Netzes an die Stromrichterschaltung erfolgt dann in einfacher Art und Weise über einen weiteren, zweckmäßigerweise selbstgeführten Stromrichter. Die Energieeinspeisung in das Netz erfolgt zweckmäßigerweise über einen Transformator mit vorgeschaltetem Filter.

Der dem Windgenerator zugeordnete Stromrichter ist zweckmäßigerweise ein selbstgeführter Stromrichter oder Wechselrichter, während der dem Dieselgenerator zugeordnete Stromrichter vorzugsweise ein ungesteuerter Gleichrichter ist.

In zweckmäßiger Ausgestaltung weist die Stromrichterschaltung eine Steuerung auf, die ausgangsseitig mit Steuereingängen der Stromrichter der Stromrichterschaltung verbunden ist. Die Einstellung der vom Windgenerator und vom Dieselgenerator in den Zwischenkreis der Stromrichterschaltung eingespeisten sowie der aus diesem entnommenen Leistung erfolgt dann mittels der zweckmäßigerweise raum- oder platzsparend in die Stromrichterschaltung integrierten Steuerung. Die Einstellung der in den Zwischenkreis eingespeisten sowie der aus diesem entnommenen Leistung erfolgt vorteilhafterweise anhand jeweils meßtechnisch erfasster Windparameter, insbesondere anhand der Windrichtung und der Windgeschwindigkeit. Dazu ist die Steuerung eingangsseitig mit einer entsprechenden Anzahl von Meßeinrichtungen verbunden. Ausgangsseitig ist die Steuerung außerdem mit Steuereingängen des Windgenerators und des Dieselgenerators verbunden.

Mittels eines vorzugsweise ebenfalls über einen weiteren Stromrichters direkt aus dem Zwischenkreis gespeisten Antriebs wird der Windgenerator und/oder der mit diesem gekuppelte Antriebsrotor in Abhängigkeit von der Windrichtung und/oder der Windgeschwindigkeit in eine mehr oder weniger senkrecht zur Windrichtung verlaufende Position gedreht. Dadurch können mit relativ kurzen Reaktionszeiten infolge des stochastischen Windverhaltens auftretende Schwankungen der vom Windgenerator in den Zwischenkreis eingespeisten Leistung zumindest grob ausgeregelt werden.

Die Steuerung stellt auch die vom Dieselgenerator in den Zwischenkreis der Stromrichterschaltung einzuspeisende Leistung ein. Dabei wird die am Zwischenkreis abgegriffene Gleichspannung in einem vorgebbaren Spannungsbereich von z.B. 450V_{DC} bis 660V_{DC} konstant gehalten, indem die meßtechnisch erfasste Ist-Spannung an die entsprechende Soll-Spannung herangeführt wird. Zur Vermeidung eines Überschreitens der Soll-Spannung ist ein vorzugsweise getakteter Widerstand vorgesehen, der der durch den Zwischenkreis gebildeten Kapazität parallelgeschaltet ist. Über diesen getakteten Widerstand wird dann der in den Zwischenkreis eingespeiste Leistungsüberschuss abgeführt.

Zweckmäßigerweise erfolgt auch die Hilfsspannungsversorgung der Steuerung sowie weiterer Elektronikbaugruppen der Vorrichtung aus dem Energieversorgungssystem des Netzes selbst. Dazu wird mittels zweier Wandler ein Gleichstromzwischenkreis gebildet, der einerseits über den an den Zwischenkreis angekoppelten Wechselrichter und andererseits entweder aus dem Windgenerator oder aus dem Dieselgenerator gespeist wird.

Bezüglich des Verfahrens wird die Aufgabe erfindungsgemäß gelöst durch die Merkmale des Anspruchs 14. Dazu wird zur unterbrechungsfreien Energieversorgung eines autonomen Netzes Energie eines ersten Energieerzeugers, insbesondere einer Windkraftanlage, und eines zweiten Energieerzeugers, insbesondere eines Dieselaggregats, in einen gemeinsamen kapazitiven Gleichspannungs-Zwischenkreis einer Stromrichterschaltung eingespeist. Die Energieabnahme des Netzes erfolgt dann zweckmäßigerweise über einen Stromrichter direkt aus dem Zwischenkreis.

Die mit der Erfindung erzielten Vorteile bestehen insbesondere darin, dass durch Energie- oder Leistungsentnahme eines autonomen Netzes aus einem Gleichspannungs-Zwischenkreis einer zweckmäßigerweise drei Stromrichter umfassenden Stromrichterschaltung, in die vorzugsweise einerseits ein Windgenerator und andererseits zweckmäßigerweise ein Dieselgenerator deren Energie gemeinsam einspeisen, eine praktisch schwarkungsfreie Energieversorgung des Netzes besonders einfach und zuverlässig gewährleistet ist. Da das Netz an den als kapazitiven Speicher wirksamen Zwischenkreis angekoppelt ist, in den sowohl der Windgenerator als auch der Dieselgenerator dessen Leistung einspeist, ist aus Sicht des Netzes die Energieversorgung praktisch unterbrechungsfrei.

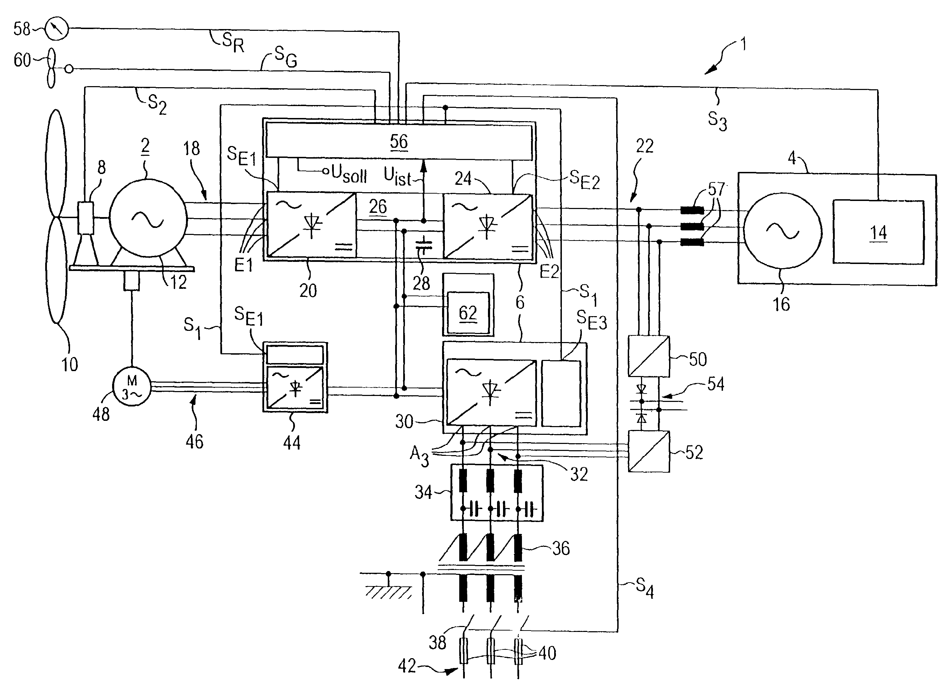

Nachfolgend wird ein Ausführungsbeispiel der Erfindung anhand einer Zeichnung näher erläutert. Darin zeigt die einzige Figur schematisch eine Vorrichtung zur unterbrechungsfreien Energieversorgung eines Inselnetzes, das an eine mit einem Windgenerator und mit einem Dieselgenerator verknüpfte Stromrichterschaltung angekoppelt ist.

Die zur unterbrechungsfreien Energieversorgung dienende Vorrichtung umfasst einen Windgenerator 2 und einen Dieselgenerator 4, die deren Leistung in eine gemeinsame Stromrichterschaltung 6 einspeisen. Der Windgenerator 2 umfasst einen über eine Bremse 8 mit einem Rotor 10 gekuppelten Generator oder Asynchronmotor 12. Der Dieselgenerator 4 umfasst eine Dieselmaschine oder ein Dieselaggregat 14, die bzw. das mit einem Generator oder Synchrongenerator 16 gekoppelt ist. Während der Windgenerator 2 über eine dreiphasige Drehstromleitung 18 mit einem ersten, selbstgeführten Stromrichter oder Wechselrichter 20 der Stromrichterschaltung 6 wechselstromseitig verbunden ist, ist der Dieselgenerator 16 über eine dreiphasige Drehstromleitung 22 an einen zweiten Stromrichter oder ungesteuerten Gleichrichter 24 der Stromrichterschaltung 6 wechselstromseitig angeschlossen. Ein gleichstromseitig zwischen den beiden Stromrichtern 20 und 24 einerseits und dem Gleichrichter 24 liegender Gleichspannungs-Zwischenkreis 26 weist eine nur angedeutete, einen kapazitiven Speicher bildende Kondensatorbatterie 28 auf.

An den die beiden Stromrichter 20 und 24 gleichstromseitig miteinander verbindenden Gleichspannungs-Zwischenkreis 26 ist ein weiterer Stromrichter 30 der Stromrichterschaltung 6 gleichstromseitig geführt. Die drei Stromrichter 20,24 und 30 der Stromrichterschaltung 6 sind somit gleichspannungsseitig parallel geschaltet. Der gleichspannungsseitig mit dem Zwischenkreis 26 verbundene selbstgeführte Stromrichter oder Wechselrichter 30 ist wechselspannungsseitig über eine dreiphasige Drehstromleitung 32 mit einem aus LC-Gliedern aufgebauten Filter 34 zur Oberwellenfilterung verbunden. Dieser wiederum ist ausgangsseitig an die Primärseite eines Transformators 36 angeschlossen, der sekundärseitig über eine Schalteinrichtung 38 mit nachgeschalteten Sicherungen 40 in ein Inselnetz 42 führt.

Die Energie- oder Leistungsflußrichtung verläuft sowohl vom Windgenerator 2 als auch vom Dieselgenerator 4 über den ersten bzw. den zweiten Stromrichter in die Stromricherschaltung 6 und dabei in deren Zwischenkreis 26 hinein und aus diesem über den dritten Stromrichter 30 in das autonome Netz oder Inselnetz 42. Dazu sind der Windgenerator 2 und der Dieselgenerator 4 jeweils ausgangsseitig mit wechselspannungsseitigen Eingängen E₁ und E₂ der Stromrichter 20 bzw. 24 verknüpft, während das Netz 42 eingangsseitig mit wechselspannungsseitigen Ausgängen A₃ des dritten Stromrichters 30 der Stromrichterschaltung 6 verknüpft ist.

Ein weiterer Stromrichter oder Wechselrichter 44 ist gleichspannungsseitig ebenfalls mit dem Zwischenkreis 26 der Stromrichterschaltung verknüpft. Dieser Stromrichter 44 ist wechselspannungsseitig über eine dreiphasige Drehstromleitung 46 mit einem Antriebsmotor 48 verbunden. Mittels des Antriebsmotors 48 kann der Windgenerator 2 oder aber auch lediglich der Rotor 10 gedreht werden.

Ein gleichstromseitig zwischen zwei Wechselstrom-Gleichstrom-Wandlern 50 und 52 (AC/DC-Wandler) gebildeter Gleichstromkreis 54 liefert eine Hilfsspannung U_{H} von z.B. 24V_{DC}. Diese Hilfsspannung U_{H} dient - zusätzlich zu nicht näher dargestellten Elektronikbaugruppen der Vorrichtung 1 - zur Spannungsversorgung einer Steuerung 56, die vorteilhafterweise in die Stromrichterschaltung 6 integriert ist. Während der Wandler 52 wechselstromseitig zwischen dem Stromrichter 30 und dem Filter 34 an die Drehstromleitung 32 geführt ist, ist der Wandler 50 wechselstromseitig zwischen den Dieselgenerator 4 und die Stromrichterschaltung 6 an die Drehstromleitung 22 geführt. In diese ist je Phase eine Drossel 57 eingeschaltet.

Beim Betrieb der Vorrichtung 1 erfassen ein Richtungsmesser 58 und ein Geschwindigkeitsmesser 60 die Windrichtung bzw. die Windgeschwindigkeit. Ein entsprechendes Richtungssignal S_{R} sowie ein Geschwindigkeitssignal S_{G} werden der Steuerung 56 als Eingangsgrößen zugeführt. Anhand dieser Signale S_{R},S_{G} generiert die Steuerung 60 ein Steuersignal S₁ für den Stromrichter 44, so dass mittels des Antriebs 48 der Windgenerator 2 und damit der Rotor 10 mehr oder weniger senkrecht zur Windrichtung ausgerichtet wird. Die hierzu erforderliche Energie oder Leistung erhält der Antrieb 48 über den Stromrichter 44 aus dem Zwischenkreis 26. Ein Steuersignal S₁ wird auch dem Stromrichter 30 zugeführt.

Ein von der Steuerung 56 generiertes weiteres Steuersignal S₂ wird an die Bremse 8 geführt, um den Rotor 10 bei hohen Windgeschwindigkeiten, insbesondere bei Sturm, stillzusetzen. Ein weiteres von der Steuerung 56 generiertes Steuersignal S₃ wird an die Dieselmaschine 14 geführt, um diese zu Starten oder Herunterzufahren. Der vom Generator 16 in den Zwischenkreis 26 eingespeiste Leistungsfluß stellt sich infolge des Spannungsniveaus im Zwischenkreis 26 automatisch ein.

Eine entsprechende Steuerung oder Regelung des Windgenerators 2 und des Dieselgenerators 4 erfolgt in Abhängigkeit von der vom Netz 42 über den Stromrichter 30 aus dem Zwischenkreis 26 entnommenen Leistung und insbesondere in Abhängigkeit von der vom Windgenerator 2 in den Zwischenkreis 26 eingespeisten Leistung. Dazu ist die Steuerung 56 zur Leistungseinstellung oder -steuerung ausgangsseitig mit entsprechenden Steuereingängen S_{E1}, S_{E2} und S_{E3} der Stromrichter 20, 24 bzw. 30 verbunden. Von der Steuerung 56 wird dabei die im Zwischenkreis 26 erfasste Ist-Spannung Uᵢₛₜ an eine vorgebbare Soll-Spannung Uₛₒₗₗ von z.B. 450V_{DC} bis 660V_{DC} herangeführt. Übersteigt die Ist-Spannung Uᵢₛₜ die Soll-Spannung Uₛₒₗₗ, so wird zunächst die Drehzahl des Rotors 10 bis an eine maximal zulässige Drehzahl herangeführt, bevor ein im Zwischenkreis 26 auftretender Leistungsüberschuss an einen mit diesem verknüpften, zweckmäßigerweise getakteten Widerstand 62 abgeführt wird. Dieser getaktete Widerstand 62 ist der durch den Zwischenkreis 26 gebildeten Kondensatorbatterie 28 parallelgeschaltet.

Auch die Schalteinrichtung 40 wird mittels der Steuerung 56 betätigt, die dazu ein Schaltsignal S₄ an die Schalteinrichtung 40 führt. Zudem ist die Aufrechterhaltung der Hilfsspannung U_{H} dadurch gewährleistet, dass die dazu erforderliche Leistung dem Stromrichter 30 und/oder dem Dieselgenerator 4 über die Drossel 57 entnommen wird.

Durch die Leistungsentnahme des Netzes 42 aus dem Gleichspannungs-Zwischenkreis 26 der Stromrichterschaltung 6 ist aus Sicht des Netzes 42 eine praktisch unterbrechungsfreie Energieversorgung gewährleistet, indem entweder der Windgenerator 2 oder der Dieselgenerator 4 oder sowohl der Windgenerator 12 als auch der Dieselgenerator 4 Energie in den Zwischenkreis 26 einspeisen. Da der Stromrichter-Zwischenkreis 26 als kapazitiver Speicher wirksam ist, wirken sich Leistungsschwankungen des Windgenerators 2 und auch infolge der Reaktionszeit des Dieselgenerators 4 bei dessen bedarfsweiser Zuschaltung auftretende kurzfristig Unterbrechungen auf das Netz 42 praktisch nicht aus.

## Patentansprüche

1. Vorrichtung zur Energieversorgung eines autonomen Netzes (42), mit einem Windgenerator (2) und mit einem Dieselgenerator (4) sowie mit einer Stromrichterschaltung (6), die eine Anzahl von gleichspannungsseitig parallel geschalteten Stromrichtern (20,24,30) aufweist, wobei wechselspannungsseitig der Windgenerator (2) an einen ersten Stromrichter (20) und der Dieselgenerator (4) an einen zweiten Stromrichter (24) geführt sind, und wobei ein dritter Stromrichter (30) wechselspannungsseitig mit dem autonomen Netz (42) verknüpft ist.

2. Vorrichtung nach Anspruch 1, wobei der dem Windgenerator (2) zugeordnete Stromrichter (20) ein selbstgeführter Stromrichter ist.

3. Vorrichtung nach Anspruch 1 oder 2, wobei der dem Dieselgenerator (2) zugeordnete Stromrichter (24) ein ungesteuerter Gleichrichter ist.

4. Vorrichtung nach einem der Ansprüche 1 bis 3, wobei der dem autonomen Netz (53) zugeordnete Stromrichter (30) ein selbstgeführter Stromrichter ist.

5. Vorrichtung nach einem der Ansprüche 1 bis 4, wobei die Stromrichterschaltung (6) eine Steuerung (56) aufweist, die ausgangsseitig mit Steuereingängen (S_{E}) der Stromrichter (20,24,30) der Stromrichterschaltung (6) verbunden ist.

6. Vorrichtung nach Anspruch 5, wobei die Steuerung (56) eingangsseitig mit einer Anzahl von Meßeinrichtungen (58,60) verbunden ist.

7. Vorrichtung nach Anspruch 5 oder 6, wobei die Steuerung (56) ausgangsseitig mit Steuereingängen des Windgenerators (2) und des Dieselgenerators (4) verbunden ist.

8. Vorrichtung nach einem der Ansprüche 1 bis 7, wobei die Stromrichterschaltung (6) einen Gleichspannungs-Zwischenkreis (26) umfaßt, der eine Kondensatorbatterie (28) aufweist.

9. Vorrichtung nach einem der Ansprüche 1 bis 8, wobei der dritte Stromrichter (30) wechselspannungsseitig über einen Transformator (36) mit dem autonomen Netz (42) verbunden ist.

10. Vorrichtung nach Anspruch 9, wobei zwischen dem dritten Stromrichter (30) und dem Transformator (36) ein Filter (34) vorgesehen ist.

11. Vorrichtung nach einem der Ansprüche 1 bis 10, mit einem Gleichstromzwischenkreis (54) zur Hilfsspannungsversorgung zwischen zwei Wechselstrom-Gleichstrom-Wandlern (50,52), wobei ein erster Wandler (50) wechselstromseitig mit einem der Generatoren (2,4) und ein zweiter Wandler (52) wechselstromseitig mit dem an den Zwischenkreis (26) angekoppelten Wechselrichter (30) verbunden ist.

12. Vorrichtung nach einem der Ansprüche 1 bis 11, wobei ein an die Stromrichterschaltung (6) gleichspannungsseitig geführter vierter Stromrichter (44) wechselspannungsseitig mit einem Antrieb (48) zur Verschwenkung eines mit dem Windgenerator (4) gekoppelten Rotors (10) verbunden ist.

13. Vorrichtung nach einem der Ansprüche 1 bis 12, wobei ein an die Stromrichterschaltung (6) gleichspannungsseitig angeschlossener Widerstand (62) vorgesehen ist, der bei Überschreiten einer Zwischenkreis-Sollspannung (Uₛₒₗₗ) zumindest einen Teil der in die Stromrichterschaltung (6) eingespeisten Leistung aufnimmt.

14. Verfahren zur unterbrechungsfreien Energieversorgung eines autonomen Netzes (42), insbesondere eines Inselnetzes, bei dem Energie eines ersten Energieerzeuger (2) und eines zweiten Energieerzeuger (4) in einen gemeinsamen Stromrichter-Zwischenkreis (26) eingespeist wird, und bei dem die Energie aus dem Stromrichter-Zwischenkreis (26) in das Netz (42) eingespeist wird.

15. Verfahren nach Anspruch 14, bei dem die Energie aus dem Stromrichter-Zwischenkreis (26) über einen Stromrichter (30) in das Netz (42) eingespeist wird.
